# EUROPEAN PATENT APPLICATION

(11) **EP 4 811 033 A1**
(43) Date of publication of application: **23.09.2026**
(21) Application number: 26165980.9
(22) Date of filing: 19.03.2026
(51) Int. Cl.: G03B 21/16, G03B 21/20

(54) **PROJECTOR**

(30) Priority: 21.03.2025 JP 2025047385
(71) Applicant: Seiko Epson Corporation, Tokyo 160-8801 (JP)
(72) Inventor: NAKATA, Yosuke, Suwa-shi, 392-8502 (JP); TSUKIOKA, Keita, Suwa-shi, 392-8502 (JP)
(74) Representative: Lewis Silkin LLP

(57) **Abstract**

A projector includes: a first light source that emits first light; a second light source that emits second light in a direction intersecting a direction of emission of the first light from the first light source; a first image generation element that generates first image light from the first light; a second image generation element that generates second image light from the second light; a first heat dissipation member that is thermally coupled to the first light source and dissipates heat generated in the first light source; a heat transport member that transports heat generated in the second light source; a second heat dissipation member that dissipates the heat transported by the heat transport member; and a first cooling unit that circulates a first airflow through the first heat dissipation member and the second heat dissipation member along a first direction, and at least a part of the first heat dissipation member and at least a part of the second heat dissipation member overlap each other in the first direction, the second light source includes a light-emitting element that emits the second light, and a substrate that supports the light-emitting element, and the heat transport member extends in a straight line along the substrate.

## Description

The present application is based on, and claims priority from JP Application Serial Number 2025-047385, filed March 21, 2025, the disclosure of which is hereby incorporated by reference herein in its entirety.

### BACKGROUND

### 1. Technical Field

The present disclosure relates to a projector.

### 2. Related Art

According to the related art, there is known a projection illumination device that modulates each of three color lights emitted from three light-emitting diodes by a transmissive light modulation element provided for each color light, combines the modulated color lights, and projects the combined color light (refer to, for example, JP-A-2000-180962).

The projection illumination device described in JP-A-2000-180962 includes three light-emitting diodes, three transmissive light modulation elements, a dichroic prism, and a projection lens. Each of the three transmissive light modulation elements is disposed to face each of the three incident surfaces of the dichroic prism, and each of the three light-emitting diodes is disposed to face the corresponding transmissive light modulation element, of the three transmissive light modulation elements. The color light emitted from each light-emitting diode is modulated by the corresponding transmissive light modulation element, and enters the corresponding incident surface of the dichroic prism. The dichroic prism combines the color lights and emits the combined light toward the projection lens. The projection lens projects the light combined by the dichroic prism.

JP-A-2000-180962 is an example of the related art.

The projection illumination device described in JP-A-2000-180962 has a problem in that, when a cooling device is provided for each light-emitting diode and each light-emitting diode is cooled by the corresponding cooling device, the configuration of the projection illumination device increases in size.

In view of such a problem, a configuration that can reduce the size of the device has been demanded.

### SUMMARY

A projector according to an aspect of the present disclosure includes: a first light source that emits first light; a second light source that emits second light in a direction intersecting a direction of emission of the first light from the first light source; a first image generation element that generates first image light from the first light; a second image generation element that generates second image light from the second light; a first heat dissipation member that is thermally coupled to the first light source and dissipates heat generated in the first light source; a heat transport member that transports heat generated in the second light source; a second heat dissipation member that dissipates the heat transported by the heat transport member; and a first cooling unit that circulates a first airflow through the first heat dissipation member and the second heat dissipation member along a first direction, and at least a part of the first heat dissipation member and at least a part of the second heat dissipation member overlap each other in the first direction, the second light source includes a light-emitting element that emits the second light, and a substrate that supports the light-emitting element, and the heat transport member extends in a straight line along the substrate.

### BRIEF DESCRIPTION OF THE DRAWINGS

FIG. 1 is a perspective view showing a projector according to a first embodiment.
FIG. 2 is a perspective view showing the projector according to the first embodiment.
FIG. 3 is a plan view showing the internal structure of the projector according to the first embodiment.
FIG. 4 is a perspective view showing a red heat dissipation member and a green heat dissipation member according to the first embodiment.
FIG. 5 is a cross-sectional view of the projector at the position of an outlet according to the first embodiment.
FIG. 6 is a schematic view showing the direction of circulation of a first airflow according to the first embodiment.
FIG. 7 is a schematic diagram showing a part of a cooling device provided in a projector according to a second embodiment.

### DESCRIPTION OF EMBODIMENTS

A first embodiment of the present disclosure will be described below with reference to the drawings.

### Schematic Configuration of Projector

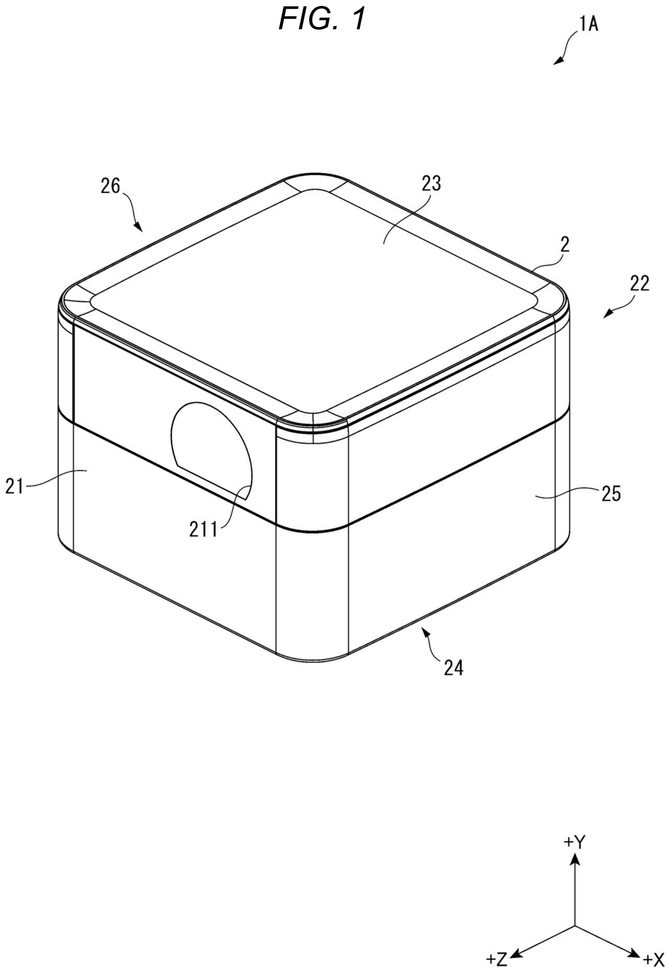

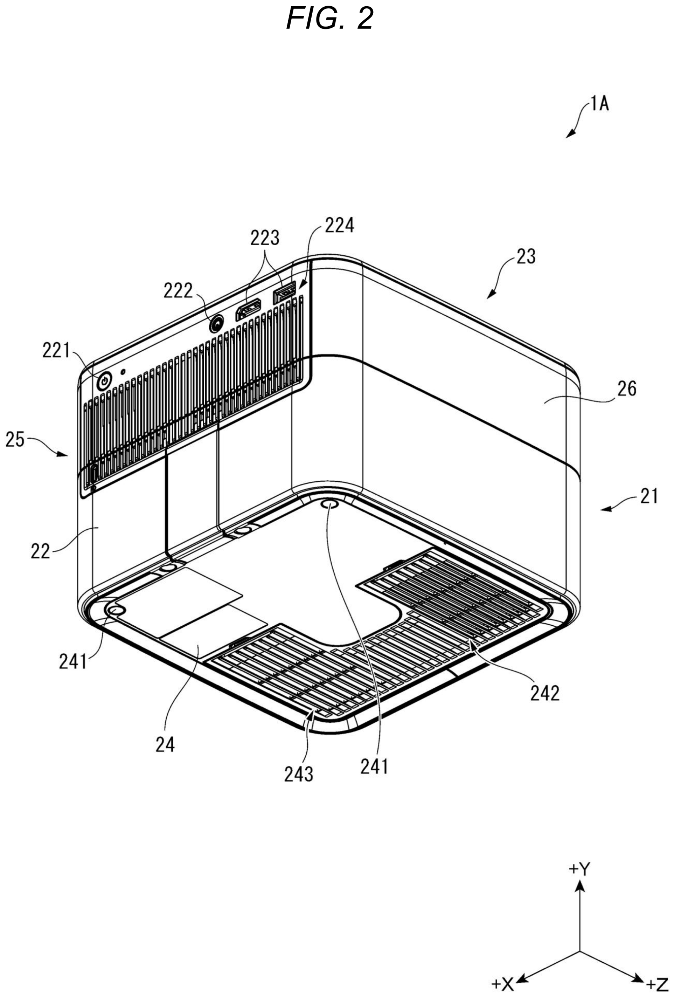

FIGS. 1 and 2 are perspective views showing a projector 1A according to the present embodiment. FIG. 1 is a perspective view of the projector 1A as viewed from a front surface 21 side, and FIG. 2 is a perspective view of the projector 1A as viewed from a back surface 22 side.

The projector 1A according to the present embodiment is an electronic device that forms and projects image light corresponding to image information. As shown in FIGS. 1 and 2, the projector 1A includes an exterior housing 2 forming the exterior of the projector 1A.

The configuration of the projector 1A will be described below.

### Configuration of Exterior Housing

The exterior housing 2 is formed of a synthetic resin or the like in a substantially rectangular parallelepiped shape. The exterior housing 2 has a front surface 21, a back surface 22, a top surface 23, a bottom surface 24, a right side surface 25, and a left side surface 26.

The front surface 21 and the back surface 22 are surfaces facing opposite to each other. As shown in FIG. 1, the front surface 21 has a projection port 211 through which image light projected from a projection optical device 36, described later, of an image projection device 3 passes. As illustrated in FIG. 2, the back surface 22 includes a power button 221, a terminal 222 to which an earphone can be coupled, and a plurality of terminals 223 to which a video cable can be coupled. In addition, the back surface 22 has an exhaust port 224 for discharging an airflow circulating through the inside of the exterior housing 2.

The top surface 23 and the bottom surface 24 are surfaces facing opposite to each other. The bottom surface 24 is a surface facing an installation surface, and the bottom surface 24 is provided with a plurality of leg parts 241 that come into contact with the installation surface, and inlet ports 242, 243 for introducing an external gas into the exterior housing 2. The gas introduced into the exterior housing 2 via the inlet port 242 and the gas introduced into the exterior housing 2 via the inlet port 243 are thermally coupled to different cooling flow paths. In the present embodiment, the gas introduced into the exterior housing 2 through the inlet port 242 is supplied to a first cooling system 4A including a first fan 44, described later. The gas introduced into the exterior housing 2 through the inlet port 243 is supplied to a second cooling system 4B including a second fan 47, described later.

A stand that supports the projector 1A and can adjust the projection angle of the image light may be attached to the bottom surface 24. In this case, the stand may have a configuration such that a gap is formed between the installation surface and the bottom surface 24 at any projection angle while the projector 1A projects the image light.

The right side surface 25 and the left side surface 26 are surfaces facing opposite to each other.

In the following description, three directions perpendicular to each another are defined as a +X direction, a +Y direction, and a +Z direction. In the present embodiment, the +Z direction is a direction from the back surface 22 toward the front surface 21, the +Y direction is a direction from the bottom surface 24 toward the top surface 23, and the +X direction is a direction from the left side surface 26 toward the right side surface 25. The projector 1A projects the image light in the +Z direction as viewed from the +Y direction.

Although not shown in the drawings, the direction opposite to the +Z direction is defined as a -Z direction, the direction opposite to the +Y direction is defined as a -Y direction, and the direction opposite to the +X direction is defined as a -X direction. An axis along the ±Z direction is defined as a Z axis, an axis along the ±Y direction is defined as a Y axis, and an axis along the ±X direction is defined as an X axis.

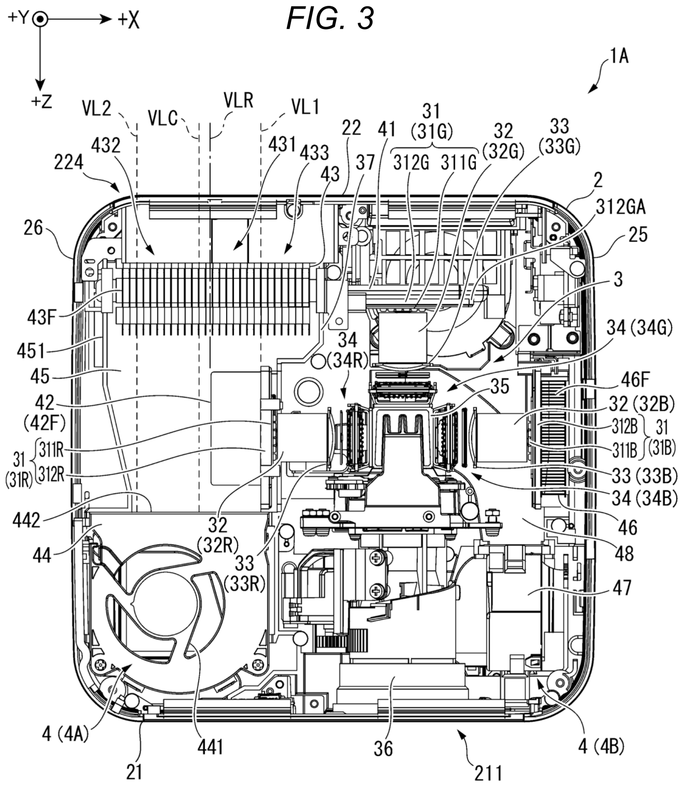

FIG. 3 is a plan view showing the inside of the exterior housing 2. That is, FIG. 3 is a plan view showing the internal structure of the projector 1A.

As shown in FIG. 3, the projector 1A further includes an image projection device 3 and a cooling device 4 accommodated in the exterior housing 2. Although not shown in the drawing, the projector 1A also includes a control device that controls the operation of the projector 1A, and a power supply device that supplies electric power to electronic components of the projector 1A. The control device and the power supply device may not necessarily be provided in the projector 1A, and for example, the power supply device may be provided outside the projector 1A.

### Configuration of Image Projection Device

The image projection device 3 forms image light and projects the image light to the outside of the exterior housing 2 via the projection port 211. The image projection device 3 includes a light source device 31, a light guide element 32, a parallelizing element 33, a light modulation device 34, a light combining element 35, a projection optical device 36, and a partition part 37.

The light source device 31 emits light for illuminating the light modulation device 34. The light source device 31 includes a red light source 31R that emits red light, a green light source 31G that emits green light, and a blue light source 31B that emits blue light.

The red light source 31R includes a red LED (light-emitting diode) 311R that emits red light in the +X direction, and a substrate 312R that supports the red LED 311R. The red light source 31R emits red light to a red light guide element 32R of the light guide element 32.

The green light source 31G includes a green LED 311G that emits green light in the +Z direction intersecting the +X direction, and a substrate 312G that supports the green LED 311G. The green light source 31G emits green light to a green light guide element 32G of the light guide element 32.

The blue light source 31B includes a blue LED 311B that emits blue light in the -X direction, and a substrate 312B that supports the blue LED 311B. The blue light source 31B emits blue light to a blue light guide element 32B of the light guide element 32.

The red LED 311R is equivalent to a first heating element, the green LED 311G is equivalent to a second heating element, and the blue LED 311B is equivalent to a third heating element.

The red LED 311R, the green LED 311G, and the blue LED 311B generate heat when emitting corresponding color light. The amount of heat generated by the red LED 311R is smaller than the amount of heat generated by the green LED 311G and larger than the amount of heat generated by the blue LED 311B. Meanwhile, the management temperature of the red LED 311R is lower than the management temperature of each of the green LED 311G and the blue LED 311B. The management temperature of the blue LED 311B is lower than the management temperature of the green LED 311G.

That is, the amount of heat generated by green LED 311G > the amount of heat generated by red LED 311R > the amount of heat generated by blue LED 311B, and the management temperature of green LED 311G > the management temperature of blue LED 311B > the management temperature of red LED 311R. The cooling difficulty of the red LED 311R > the cooling difficulty of the green LED 311G > the cooling difficulty of the blue LED 311B. Therefore, in the present embodiment, each of the red LED 311R and the green LED 311G having a high cooling difficulty is cooled by the first cooling system 4A, described later, and the blue LED 311B having a low cooling difficulty is cooled by the second cooling system 4B, described later. As will be described in detail later, the number of cooling targets in the first cooling system 4A is small, and the number of cooling targets in the second cooling system 4B is large. The cooling difficulty indicates the difficulty of cooling, and specifically, a high cooling difficulty indicates that the necessity of cooling is high.

A red heat dissipation member 42 forming the cooling device 4 is coupled to a surface of the substrate 312R opposite to the red LED 311R in a heat transferable manner.

A blue heat dissipation member 46 forming the cooling device 4 is coupled to a surface of the substrate 312B opposite to the blue LED 311B in a heat transferable manner.

A heat transport member 41 forming the cooling device 4 is coupled to a surface of the substrate 312G opposite to the green LED 311G in a heat transferable manner, and a green heat dissipation member 43 is coupled to an end part of the heat transport member 41 opposite to the substrate 312G in a heat transferable manner.

In this way, the heat of each of the light sources 31R, 31G, 31B generated by each of the LEDs 311R, 311G, 311B is dissipated by the cooling device 4.

The light guide element 32 is formed in a substantially truncated quadrangular pyramid shape and guides the light emitted from the light source device 31 to the light modulation device 34. The light guide element 32 includes the red light guide element 32R that guides red light, the green light guide element 32G that guides green light, and the blue light guide element 32B that guides blue light.

The red light guide element 32R guides the red light emitted from the red LED 311R to a red light modulation element 34R of the light modulation device 34 while uniformizing the illuminance of the red light.

The green light guide element 32G guides the green light emitted from the green LED 311G to a green light modulation element 34G of the light modulation device 34 while uniformizing the illuminance of the green light.

The blue light guide element 32B guides the blue light emitted from the blue LED 311B to a blue light modulation element 34B of the light modulation device 34 while uniformizing the illuminance of the blue light.

The parallelizing element 33 is a so-called field lens disposed between the light guide element 32 and the light modulation device 34. The parallelizing element 33 includes a red parallelizing element 33R provided in the optical path of the red light, a green parallelizing element 33G provided in the optical path of the green light, and a blue parallelizing element 33B provided in the optical path of the blue light.

Each of the parallelizing elements 33R, 33G, 33B parallelizes the incident color light and emits the parallelized color light. For example, the red parallelizing element 33R parallelizes the red light incident from the red light guide element 32R and emits the parallelized red light to the red light modulation element 34R of the light modulation device 34. The same applies to the green parallelizing element 33G and the blue parallelizing element 33B.

The light modulation device 34 modulates the light incident from the light source device 31 via the light guide element 32 and the parallelizing element 33. The light modulation device 34 includes the red light modulation element 34R, the green light modulation element 34G, and the blue light modulation element 34B.

The red light modulation element 34R is a first image generation element that modulates the red light and thus generates red image light. The red light is equivalent to first light, and the red image light is equivalent to first image light.

The green light modulation element 34G is a second image generation element that modulates the green light and thus generates green image light. The green light is equivalent to second light, and the green image light is equivalent to second image light.

The blue light modulation element 34B is a third image generation element that modulates the blue light and thus generates blue image light. The blue light is equivalent to third light, and the blue image light is equivalent to third image light.

As an example of the light modulation elements 34R, 34G, 34B, a transmissive liquid crystal light valve including a liquid crystal panel, and an incident-side polarizing plate and an exiting-side polarizing plate sandwiching the liquid crystal panel, can be provided.

The light combining element 35 combines the red light modulated by the red light modulation element 34R, the green light modulated by the green light modulation element 34G, and the blue light modulated by the blue light modulation element 34B and thus forms the image light to be projected by the projection optical device 36. The light combining element 35 emits the formed image light toward the projection optical device 36. As an example of the light combining element 35, a cross dichroic prism formed in a substantially rectangular parallelepiped shape can be provided.

The projection optical device 36 is one of the optical components and projects the image light emitted from the light combining element 35. The image light projected by the projection optical device 36 is projected onto a projection surface such as a screen via the projection port 211. As an example of the projection optical device 36, a lens assembly including a plurality of lenses and a lens barrel accommodating the plurality of lenses can be provided.

The partition part 37 couples the red light source 31R and the green light source 31G to each other and thus partitions the image projection device 3 from the red heat dissipation member 42 and the green heat dissipation member 43, described later, of the cooling device 4. In addition, the partition part 37 has a function of guiding a first airflow circulating through the red heat dissipation member 42 to the green heat dissipation member 43. That is, the partition part 37 forms a part of a first duct 45, described later.

### Configuration of Cooling Device

The cooling device 4 cools a cooling target in the projector 1A. The cooling device 4 includes the heat transport member 41, the red heat dissipation member 42, the green heat dissipation member 43, the first fan 44, the first duct 45, the blue heat dissipation member 46, the second fan 47, and a second duct 48.

The heat transport member 41, the red heat dissipation member 42, the green heat dissipation member 43, the first fan 44, and the first duct 45 form the first cooling system 4A that cools each of the red LED 311R of the red light source 31R and the green LED 311G of the green light source 31G.

The blue heat dissipation member 46, the second fan 47, and the second duct 48 form the second cooling system 4B that cools the blue LED 311B of the blue light source 31B and the light modulation elements 34R, 34G, 34B.

### Configuration of Second Cooling System

First, the second cooling system 4B will be described.

The blue heat dissipation member 46 is equivalent to a third heat dissipation member, and is coupled to the surface of the substrate 312B of the blue light source 31B opposite to the blue LED 311B in a heat transferable manner. The blue heat dissipation member 46 dissipates the heat transferred from the blue LED 311B via the substrate 312B.

The blue heat dissipation member 46 includes a plurality of fins 46F.

Each of the plurality of fins 46F is formed in a plate shape along an XY plane defined by the X axis and the Y axis. The blue heat dissipation member 46 is configured with the plurality of fins 46F arranged side by side in the Z-axis and coupled to each other. An airflow generated by the second fan 47 circulates in the +Y direction between the plurality of fins 46F.

The second fan 47 circulates a second airflow to the light modulation elements 34R, 34G, 34B and the blue heat dissipation member 46. The second airflow is an airflow circulated by the second fan 47.

In the present embodiment, the second fan 47 is configured with a sirocco fan and is disposed in the +X direction with respect to the projection optical device 36 in the exterior housing 2. The second fan 47 suctions the gas in the exterior housing 2, sends the suctioned gas to the second duct 48, and circulates the second airflow to the light modulation elements 34R, 34G, 34B and the blue heat dissipation member 46 via the second duct 48.

The second duct 48 is disposed in the -Y direction with respect to the light modulation device 34 and the light combining element 35. The second duct 48 divides the second airflow sent out from the second fan 47 and circulates the second airflow to the light modulation elements 34R, 34G, 34B and the blue heat dissipation member 46 from the -Y direction. Thus, the light modulation elements 34R, 34G, 34B and the blue LED 311B are cooled. The second airflow circulating through the light modulation elements 34R, 34G, 34B and the blue LED 311B is discharged to the outside of the exterior housing 2 via the exhaust port 224. A sirocco fan or the like as an exhaust fan may be disposed at a position in the -Y direction with respect to the green light source 31G so that the airflow can be efficiently discharged to the outside of the exterior housing 2. As the exhaust fan is disposed in the -Y direction of the optical system including the green light source 31G, an increase in the area of the projector 1A along an XZ plane can be suppressed.

### Configuration of First Cooling System

### Configuration of Heat Transport Member

The heat transport member 41 is coupled to a surface 312GA of the substrate 312G of the green light source 31G opposite to the green LED 311G. The surface 312GA is one of the surfaces of the substrate 312G and is orthogonal to the Z axis. That is, the surface 312GA is parallel to the plane defined by the X axis and the Y axis.

The heat transport member 41 extends in a straight line in the -X direction along the surface 312GA. The end part in the +X direction of the heat transport member 41 is a heat receiving end coupled to the surface 312GA of the substrate 312G, and the end part in the -X direction is a heat dissipation end thermally coupled to the green heat dissipation member 43. The heat transport member 41 transports the heat of the green LED 311G received from the substrate 312G to the green heat dissipation member 43.

In the present embodiment, the heat transport member 41 is coupled to the surface 312GA but may be coupled to the surface of the substrate 312G where the green LED 311G is provided.

### Configuration of Red Heat Dissipation Member

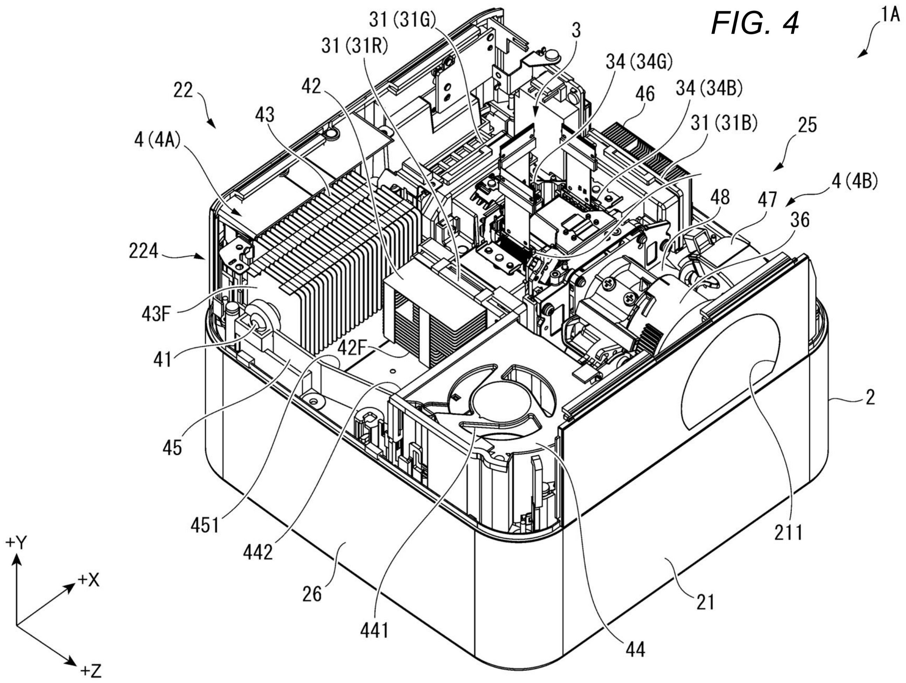

FIG. 4 is a perspective view showing the red heat dissipation member 42 and the green heat dissipation member 43.

The red heat dissipation member 42 is equivalent to a first heat dissipation member and is coupled to the surface of the substrate 312R of the red light source 31R opposite to the red LED 311R in a heat transferable manner. The red heat dissipation member 42 dissipates the heat transferred from the red LED 311R via the substrate 312R. The red heat dissipation member 42 includes a plurality of fins 42F. The fin 42F is equivalent to a first fin.

Each of the plurality of fins 42F is formed in a plate shape along the XZ plane defined by the -Z direction, which is the direction of circulation of the airflow, and the -X direction orthogonal to the -Z direction. The red heat dissipation member 42 is configured with the plurality of fins 42F arranged side by side in the +Y direction orthogonal to each of the -Z direction and the -X direction and coupled to each other. The first airflow is circulated in the - Z direction between the plurality of fins 42F by the first fan 44.

The -Z direction is equivalent to a first direction, the -X direction is equivalent to a second direction, and the +Y direction is equivalent to a third direction.

### Configuration of Green Heat Dissipation Member

The green heat dissipation member 43 shown in FIG. 3 is equivalent to a second heat dissipation member and is provided at the heat dissipation end of the heat transport member 41. The green heat dissipation member 43 is disposed in the -Z direction with respect to the red heat dissipation member 42. In other words, the green heat dissipation member 43 is disposed downstream of the red heat dissipation member 42 in the flow path of the airflow generated by the first fan 44. The green heat dissipation member 43 dissipates the heat of the green LED 311G transferred via the heat transport member 41, to the first airflow.

The green heat dissipation member 43 includes a plurality of fins 43F. The fin 43F is equivalent to a second fin.

As illustrated in FIGS. 3 and 4, each of the plurality of fins 43F is formed in a plate shape along a YZ plane defined by the -Z direction and the +Y direction orthogonal to the -Z direction. The green heat dissipation member 43 is configured with the plurality of fins 43F provided side by side in the -X direction orthogonal to each of the -Z direction and the +Y direction, on the outer circumferential surface of the heat transport member 41. Between the plurality of fins 43F, the first airflow is circulated in the -Z direction by the first fan 44, and the first airflow circulating between the plurality of fins 43F is discharged to the outside of the exterior housing 2 via the exhaust port 224.

The green heat dissipation member 43 is not limited to the configuration in which the plurality of fins 43F provided on the outer circumferential surface of the heat transport member 41 are coupled together by the heat transport member 41, and a coupling part coupling the plurality of fins 43F may be thermally coupled to the heat transport member 41.

The green heat dissipation member 43 includes a first region 431, a second region 432, and a third region 433.

The first region 431 is a region facing the red heat dissipation member 42 in the -Z direction. That is, the red heat dissipation member 42 is disposed between the first fan 44 and the first region 431 in the +Z direction.

The second region 432 is a region located further in the -X direction than the first region 431, and is a region facing an outlet port 442, described later, of the first fan 44 in the -Z direction. Nothing is disposed between the outlet port 442 and the second region 432 in the -Z direction. The surface area of the second region 432 is larger than the surface area of the first region 431.

The third region 433 is a region located further in the +X direction than the first region 431. The third region 433 does not face the red heat dissipation member 42 in the -Z direction and does not face the outlet port 442 in the -Z direction. The surface area of the third region 433 is substantially the same as the surface area of the first region 431 and is smaller than the surface area of the second region 432. Meanwhile, the total surface area of the surface area of the first region 431 and the surface area of the third region 433 is larger than the surface area of the second region 432.

### Comparison Between Red Heat Dissipation Member and Green Heat Dissipation Member

The configuration of the red heat dissipation member 42 and the configuration of the green heat dissipation member 43 will now be compared.

The surface area of the red heat dissipation member 42 is smaller than the surface area of the green heat dissipation member 43.

The array pitch of the fins 42F of the red heat dissipation member 42 is different from the array pitch of the fins 43F of the green heat dissipation member 43. Specifically, the array pitch of the fins 42F is smaller than the array pitch of the fins 43F.

The number of fins 42F in the red heat dissipation member 42 is smaller than the number of fins 43F in the green heat dissipation member 43.

### Configuration of First Fan

The first fan 44 circulates the first airflow to the red heat dissipation member 42 and the green heat dissipation member 43. The first airflow is an airflow circulated by the first fan 44.

In the present embodiment, the first fan 44 is disposed in the +Z direction with respect to the red heat dissipation member 42 and the green heat dissipation member 43. In other words, the first fan 44 is located further upstream of the red heat dissipation member 42 located upstream of the green heat dissipation member 43 in the flow path of the airflow sent out by the first fan 44.

The first fan 44 is a centrifugal fan having an intake port 441 and the outlet port 442.

The intake port 441 suctions the gas introduced into the exterior housing 2 from the inlet port 242. The intake port 441 is provided at each of the surface of the first fan 44 facing the +Y direction and the surface of the first fan 44 facing the -Y direction. That is, the first fan 44 is a double-sided centrifugal fan. However, the first fan 44 is not limited thereto and may be, for example, a single-sided centrifugal fan having the intake port 441 only at the surface facing the -Y direction. The centrifugal fan may be a turbofan or a sirocco fan.

The outlet port 442 is provided at the surface of the first fan 44 facing the -Z direction and sends out the gas suctioned through the intake port 441. The first fan 44 sends out the cooling gas from the outlet port 442 into the -Z direction and thus generates the first airflow circulating to the red heat dissipation member 42 and the green heat dissipation member 43.

The first duct 45 guides the first airflow circulated by the first fan 44, to the red heat dissipation member 42 and the green heat dissipation member 43. Specifically, the first duct 45 accommodates the red heat dissipation member 42, the green heat dissipation member 43, and the first fan 44 therein, and circulates the first airflow sent out from the first fan 44 to the red heat dissipation member 42 and the green heat dissipation member 43.

As illustrated in FIG. 3, the first duct 45 includes a guide part 451 formed by an inner surface facing the +X direction, of the inner surfaces of the first duct 45. The guide part 451 guides the first airflow sent out from the outlet port 442 to the second region 432 of the green heat dissipation member 43. The end part of the guide part 451 in the +Z direction is coupled to the outlet port 442, and the end part in the -Z direction extends to a part in the -X direction with respect to the green heat dissipation member 43. Therefore, the guide part 451 extends in the -X direction away from the red heat dissipation member 42 and the green heat dissipation member 43 as it goes in the -Z direction, which is the direction of circulation of the airflow, and the guide part 451 covers the heat transport member 41 and the green heat dissipation member 43 as viewed from the -X direction. Thus, a part of the first airflow sent out from the outlet port 442 is easily circulated to the second region 432.

### Positional Relationship between Outlet Port and Red and Green Heat Dissipation Members

Here, as illustrated in FIG. 3, an imaginary line passing through the end part of the outlet port 442 in the +X direction and extending in the -Z direction as viewed from the +Y direction is defined as a first imaginary line VL1. An imaginary line passing through the center of the outlet port 442 in the +X direction and extending in the -Z direction as viewed from the +Y direction is defined as a central imaginary line VLC. An imaginary line passing through the end part of the outlet port 442 in the -X direction and extending in the -Z direction is defined as a second imaginary line VL2.

The red heat dissipation member 42 is disposed between the first imaginary line VL1 and the second imaginary line VL2. Specifically, the red heat dissipation member 42 is disposed between the first imaginary line VL1 and the central imaginary line VLC. In the present embodiment, the end part of the red heat dissipation member 42 in the +X direction is located on the first imaginary line VL1. An imaginary line VLR passing through the end part of the red heat dissipation member 42 in the -X direction and parallel to the -Z direction is located between the first imaginary line VL1 and the central imaginary line VLC.

Meanwhile, the green heat dissipation member 43 extends across the second imaginary line VL2 to the side opposite to the first imaginary line VL1 with respect to the second imaginary line VL2. That is, the green heat dissipation member 43 extends further in the -X direction than the second imaginary line VL2 in addition to extending further in the +X direction than the first imaginary line VL1. As described above, the guide part 451 of the first duct 45 extends in the -X direction as it goes toward the -Z direction, and covers the green heat dissipation member 43 as viewed from the -X direction.

### First Airflow Circulated by First Fan

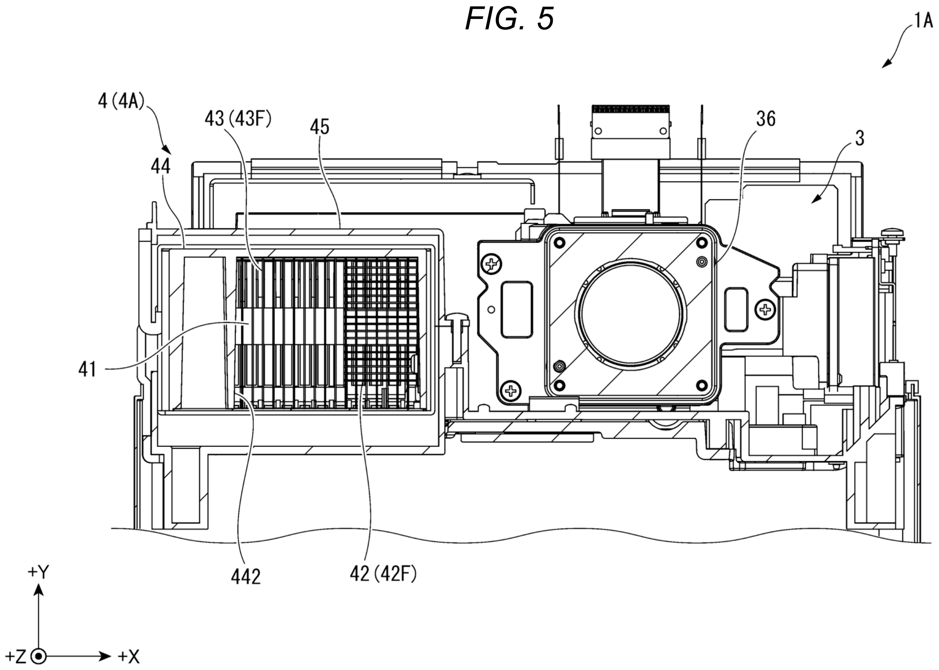

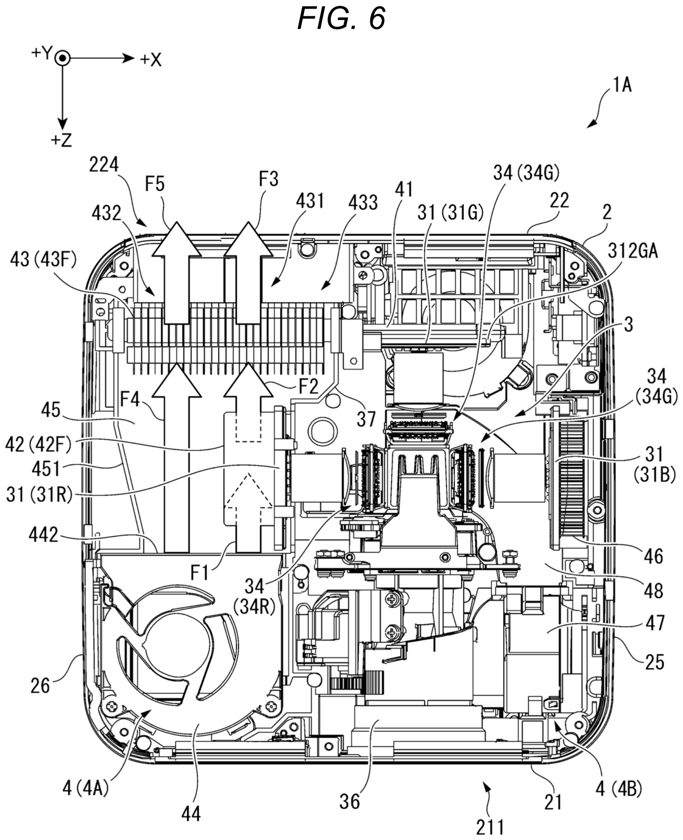

FIG. 5 shows a cross section of the projector 1A along the XY plane at the position of the outlet port 442 as viewed from the +Z direction. That is, FIG. 5 is a diagram illustrating the positional relationship between the outlet port 442, and the red heat dissipation member 42 and the green heat dissipation member 43. In FIG. 5, a part of the exterior housing 2 is not illustrated. FIG. 6 is a schematic diagram illustrating the direction of circulation of the first airflow sent out from the outlet port 442.

As illustrated in FIG. 5, as viewed from the outlet port 442, the red heat dissipation member 42 is disposed in the outlet port 442, and a part of the second region 432 of the green heat dissipation member 43 is disposed in the outlet port 442.

Therefore, as illustrated in FIG. 6, a first airflow F1 sent out from the region in the +X direction of the outlet port 442, of the first airflow sent out in the -Z direction from the outlet port 442, directly circulates to the red heat dissipation member 42. The first airflow F1 circulating through the red heat dissipation member 42 circulates between the plurality of fins 42F in the -Z direction and thus cools the red heat dissipation member 42. A first airflow F2, upon cooling the red heat dissipation member 42, further circulates in the -Z direction and circulates to the first region 431 of the green heat dissipation member 43 facing the red heat dissipation member 42 and the third region 433 located in the +X direction with respect to the first region 431.

The first airflow F2 circulating through the first region 431 and the third region 433 circulates in the -Z direction between the plurality of fins 43F in the regions 431, 433 and thus cools the regions 431, 433. A first airflow F3, upon cooling the regions 431, 433, further circulates in the -Z direction and is discharged to the outside of the exterior housing 2 via the exhaust port 224 provided in the back surface 22.

A first airflow F4 sent out from the region in the -X direction of the outlet port 442, of the first airflow sent out in the -Z direction from the outlet port 442, directly circulates to the second region 432 of the green heat dissipation member 43. The first airflow F4 circulating through the second region 432 circulates in the -Z direction between the plurality of fins 43F in the second region 432 and thus cools the green heat dissipation member 43. A first airflow F5, upon cooling the second region 432, further circulates in the -Z direction in the same manner as the airflow cooling the regions 431, 433, and is discharged to the outside of the exterior housing 2 via the first region 431 facing the red heat dissipation member 42, in the green heat dissipation member 43, and the exhaust port 224.

### Effects of First Embodiment

The projector 1A according to the present embodiment described above achieves the following effects.

The projector 1A includes the red light source 31R, the green light source 31G, the red light modulation element 34R, the green light modulation element 34G, the heat transport member 41, the red heat dissipation member 42, the green heat dissipation member 43, and the first fan 44.

The red light source 31R is equivalent to a first light source and emits red light in the +X direction as the first light.

The green light source 31G is equivalent to a second light source and emits green light in the +Z direction intersecting the direction of emission of the red light from the red light source 31R. The green light is equivalent to the second light.

The green light source 31G includes the green LED 311G, which is a light-emitting element that emits green light, and the substrate 312G supporting the green LED 311G. The green LED 311G includes a light-emitting unit that emits green light and a base to which the light-emitting unit is fixed.

The red light modulation element 34R is equivalent to the first image generation element and generates red image light from red light. The red image light is equivalent to the first image light.

The green light modulation element 34G is equivalent to the second image generation element and generates green image light from the green light. The green image light is equivalent to the second image light.

The red heat dissipation member 42 is equivalent to the first heat dissipation member, is coupled to the red light source 31R, and dissipates the heat generated by the red light source 31R. The heat transport member 41 transports the heat generated by the green light source 31G to the green heat dissipation member 43. The green heat dissipation member 43 dissipates the heat of the green light source 31G transported by the heat transport member 41. At least a part of the red heat dissipation member 42 and at least a part of the green heat dissipation member 43 overlap each other in the -Z direction.

The first fan 44 is equivalent to a first cooling unit, and circulates the first airflow to each of the red heat dissipation member 42 and the green heat dissipation member 43 along the -Z direction, which is the first direction.

The heat transport member 41 extends in a straight line along the substrate 312G.

According to such a configuration, since the red heat dissipation member 42 and the green heat dissipation member 43 are cooled by the first airflow circulated by the first fan 44, the red light source 31R and the green light source 31G can be cooled by the first fan 44. Therefore, the number of fans can be made fewer than when fans are provided corresponding respectively to the red light source 31R and the green light source 31G. The size of the projector 1A can thus be reduced.

Here, when the bent part is present in the heat transport member 41, which is a heat pipe, there is a problem in that the heat transport efficiency of the heat transport member 41 decreases.

However, since the heat transport member 41 extends in a straight line along the substrate 312G supporting the green LED 311G, a decrease in the heat transport efficiency of the heat transport member 41 can be suppressed.

Therefore, the size of the projector 1A can be reduced and the cooling efficiency for the green light source 31G can be increased.

In the projector 1A, the green heat dissipation member 43 has the first region 431 and the second region 432.

The first region 431 overlaps the red heat dissipation member 42 in the -Z direction. The first airflow circulating through the red heat dissipation member 42 circulates to the first region 431.

The second region 432 does not overlap the red heat dissipation member 42 in the -Z direction. The first airflow circulates to the second region 432 without passing through the red heat dissipation member 42.

The red heat dissipation member 42 is disposed in the direction opposite to the -Z direction with respect to the green heat dissipation member 43. That is, the red heat dissipation member 42 is disposed upstream of the green heat dissipation member 43 in the flow path of the first airflow.

According to such a configuration, the temperature of the first airflow circulating to the green heat dissipation member 43 can be made lower than when only the first airflow circulating through the red heat dissipation member 42 circulates to the green heat dissipation member 43. Therefore, the cooling efficiency of the green heat dissipation member 43 can be increased and thus the cooling efficiency of the green light source 31G can be increased.

In the projector 1A, the surface area of the second region 432 is larger than the surface area of the first region 431.

According to such a configuration, the cooling efficiency of the green heat dissipation member 43 can be made higher than when the surface area of the second region 432 is equal to or less than the surface area of the first region 431. Therefore, the cooling efficiency of the green light source 31G can be increased.

The projector 1A includes the guide part 451 that extends along the -Z direction and guides the first airflow to the green heat dissipation member 43. The first fan 44 has the outlet port 442 for sending out the first airflow. The first fan 44 is disposed upstream of the red heat dissipation member 42 and the green heat dissipation member 43 in the flow path of the first airflow. The guide part 451 couples a part on the outlet port 442 side to a part around the second region 432.

According to such a configuration, the first airflow sent out from the outlet port 442 can be easily circulated to the second region 432. Therefore, the cooling efficiency of the green heat dissipation member 43 can be made higher than when the guide part 451 is not provided.

In the projector 1A, the red heat dissipation member 42 is disposed between the first imaginary line VL1 extending in the -Z direction from the end part of the outlet port 442 in the +X direction and the second imaginary line VL2 extending in the -Z direction from the end part of the outlet port 442 in the -X direction. The green heat dissipation member 43 extends across the second imaginary line VL2 to the side opposite to the first imaginary line VL1 with respect to the second imaginary line VL2. The end part of the outlet port 442 in the +X direction is equivalent to one end of the outlet port 442, and the end part of the outlet port 442 in the -X direction is equivalent to the other end of the outlet port 442.

The guide part 451 extends to the side opposite to the first imaginary line VL1 with respect to the second imaginary line VL2 as it goes toward the -Z direction. That is, the guide part 451 extends in the -X direction as it goes toward the -Z direction.

According to such a configuration, the green heat dissipation member 43 can be configured to be long in the -X direction intersecting each of the imaginary lines VL1 and VL2. Thus, since the second region 432 can be extended in the -X direction, the surface area of the second region 432 can be easily increased.

Also, since the guide part 451 extends as described above, the first airflow sent out from the outlet port 442 can be easily circulated to the green heat dissipation member 43 extending across the second imaginary line VL2 to the side opposite to the first imaginary line VL1.

Therefore, the cooling efficiency of the green heat dissipation member 43 can be increased and thus the cooling efficiency of the green light source 31G can be increased.

In the projector 1A, the red heat dissipation member 42 has the plurality of fins 42F through which the first airflow circulates along the -Z direction. The fin 42F is equivalent to the first fin. The green heat dissipation member 43 includes the plurality of fins 43F through which the first airflow circulates along the -Z direction. The fin 43F is equivalent to the second fin.

According to such a configuration, the surface areas of each of the heat dissipation members 42, 43 can be easily increased. Thus, the cooling efficiency of each of the heat dissipation members 42, 43 can be adjusted by adjusting the numbers of fins 42F, 43F or adjusting the surface area of the fins 42F, 43F, or the like, and thus the cooling efficiency of the light sources 31R, 31G can be adjusted. Therefore, the temperature of each of the light sources 31R, 31G can be easily adjusted. The surface area of each of the heat dissipation members 42, 43 may also be adjusted by enlarging or reducing the heat dissipation member in at least one of the -X direction and the -Z direction. For example, the surface area of the green heat dissipation member 43 may be adjusted such that the second region 432 extends in the +Z direction and the green heat dissipation member 43 has an L-shape as viewed from the +Y direction.

In the projector 1A, each of the plurality of fins 42F is formed in a plate shape along the XZ plane defined by the -Z direction and the -X direction orthogonal to the -Z direction and is disposed side by side in the +Y direction orthogonal to each of the -Z direction and the -X direction.

Each of the plurality of fins 43F is formed in a plate shape along the YZ plane defined by the -Z direction and the +Y direction and is disposed side by side in the -X direction.

The -Z direction is equivalent to the first direction, the -X direction is equivalent to the second direction, and the +Y direction is equivalent to the third direction.

According to such a configuration, the direction in which the plurality of fins 42F are arranged is orthogonal to the direction in which the plurality of fins 43F are arranged, as viewed along the -Z direction. According to this configuration, a turbulent flow generated by the circulation of the first airflow along the plurality of fins 42F can be circulated to the plurality of fins 43F arranged in a different direction, and the temperature boundary layer of the plurality of fins 43F can be reduced in thickness by such a turbulent flow. That is, heat transfer from each fin 43F to the first airflow can be promoted by the turbulent flow. Therefore, since the cooling efficiency of the green heat dissipation member 43 can be increased and the first airflow having a low temperature circulates through the red heat dissipation member 42, the cooling efficiency of each of the heat dissipation members 42, 43 can be increased.

In the projector 1A, the array pitch of the plurality of fins 42F is different from the array pitch of the plurality of fins 43F.

According to such a configuration, the cooling efficiency of each of the heat dissipation members 42, 43 can be adjusted by adjusting the array pitch of the fins 42F, 43F, and thus the cooling efficiency of each of the light sources 31R, 31G can be adjusted. Therefore, the temperature of each of the light sources 31R, 31G can be easily adjusted.

In the projector 1A, the array pitch of the plurality of fins 42F is smaller than the array pitch of the plurality of fins 43F.

According to such a configuration, even when the volume of the red heat dissipation member 42 is relatively small, the surface of the red heat dissipation member 42 necessary for cooling the red heat dissipation member 42 and thus cooling the red light source 31R can be secured.

In the projector 1A, the surface area of the green heat dissipation member 43 is equal to or larger than the surface area of the red heat dissipation member 42.

According to such a configuration, the heat dissipation efficiency of the green heat dissipation member 43, through which the first airflow increased in temperature due to the circulation through the red heat dissipation member 42 circulates, can be made higher than when the surface area of the green heat dissipation member 43 is smaller than the surface area of the red heat dissipation member 42. Therefore, the temperature of the green light source 31G can be maintained to be low.

The projector 1A includes the blue light source 31B, the blue heat dissipation member 46, and the second fan 47.

The blue light source 31B emits blue light in the direction opposite to the direction of emission of the red light from the red light source 31R. The blue light source 31B is equivalent to a third light source, and the blue light is equivalent to the third light.

The blue heat dissipation member 46 dissipates the heat generated by the blue light source 31B.

The second fan 47 circulates the airflow to flow to the blue heat dissipation member 46. The second fan 47 is equivalent to a second cooling unit.

According to such a configuration, the blue heat dissipation member 46 can be cooled independently of the red heat dissipation member 42 and the green heat dissipation member 43. Therefore, the blue heat dissipation member 46 can be effectively cooled and thus the blue light source 31B can be effectively cooled.

The projector 1A includes the blue light modulation element 34B and the light combining element 35.

The blue light modulation element 34B is equivalent to the third image generation element and generates blue image light from the blue light. The blue image light is equivalent to the third image light.

The light combining element 35 combines the red image light, the green image light, and the blue image light.

The red light source 31R includes the red LED 311R that emits red light.

The green light source 31G includes the green LED 311G that emits green light as a light-emitting element.

The blue light source 31B includes the blue LED 311B that emits blue light.

According to such a configuration, the projector 1A can generate full-color image light.

When the temperature of the red LED exceeds the upper limit of an appropriate temperature range or when the temperature of the red LED falls below the lower limit of the appropriate temperature range, the amount of light emitted from the red LED drastically decreases. However, the red heat dissipation member 42 that dissipates the heat of the red LED 311R can be cooled by the first airflow having a temperature lower than that of the first airflow circulating through the green heat dissipation member 43, to which the heat of the green LED 311G is transported. Therefore, the temperature of the red LED 311R can be easily maintained within the appropriate temperature range.

### Second Embodiment

A second embodiment of the present disclosure will now be described.

The projector according to the present embodiment has a configuration similar to that of the projector 1A according to the first embodiment, but the position of the first fan is different. In the following description, the same or substantially the same parts as the parts that are already described are denoted by the same reference numerals, and the description thereof will be omitted.

### Schematic Configuration of Projector

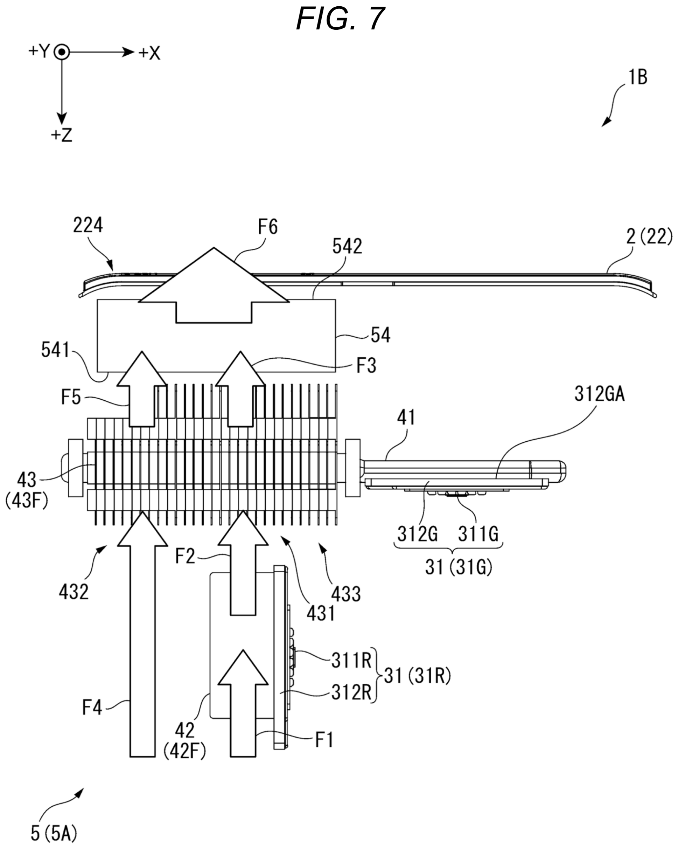

FIG. 7 is a schematic diagram showing the configuration of a part of a cooling device 5 in a projector 1B according to the present embodiment.

The projector 1B according to the present embodiment has a configuration and functions similar to those of the projector 1A according to the first embodiment except for having the cooling device 5 shown in FIG. 7 instead of the cooling device 4 according to the first embodiment.

The cooling device 5 includes a first cooling system 5A and the second cooling system 4B, and the first cooling system 5A has a configuration and functions similar to those of the first cooling system 4A except for having a first fan 54 illustrated in FIG. 7 instead of the first fan 44. That is, the first cooling system 5A includes the heat transport member 41, the red heat dissipation member 42, the green heat dissipation member 43, the first fan 54, and the first duct 45, not illustrated in FIG. 7, and cools each of the red LED 311R of the red light source 31R and the green LED 311G of the green light source 31G.

The first fan 54 is disposed downstream of the red heat dissipation member 42 and the green heat dissipation member 43 in the flow path of the first airflow generated by the first fan 54. Specifically, the first fan 54 is disposed in the -Z direction with respect to the green heat dissipation member 43.

In the present embodiment, the first fan 54 is configured with an axial fan having an intake port 541 and an outlet port 542 facing opposite to each other.

The intake port 541 faces the +Z direction, and the outlet port 542 faces the -Z direction. In other words, the intake port 541 faces the green heat dissipation member 43, and the outlet port 542 faces the exhaust port 224.

When the first fan 54 is driven, the gas in the space in the +Z direction with respect to the first fan 54 is suctioned in, and thus the first airflow circulating to the red heat dissipation member 42 and the green heat dissipation member 43 along the -Z direction is generated. The direction of circulation of the first airflow to each of the heat dissipation members 42, 43 is similar to that in the first cooling system 4A according to the first embodiment.

Then, the first fan 54 suctions first airflows F3, F5 circulating through the green heat dissipation member 43, and discharges the sucked first airflows F3, F5 to the outside of the exterior housing 2 as a first airflow F6 via the exhaust port 224.

The projector 1B according to the present embodiment can achieve effects similar to those of the projector 1A according to the first embodiment.

### Modifications of Embodiments

The present disclosure is not limited to each of the above embodiments, and modifications, improvements, and the like within a range that can achieve the object of the present disclosure should fall within the scope of the present disclosure.

In the above embodiments, the projectors 1A, 1B each include the red heat dissipation member 42, which is disposed on the first flow path and dissipates the heat of the red light source 31R as the first light source, and the green heat dissipation member 43, which is disposed on the first flow path and dissipates the heat of the green light source 31G transferred via the heat transport member 41. However, the present disclosure is not limited thereto, and the light source thermally coupled to the first heat dissipation member, of the first heat dissipation member and the second heat dissipation member disposed on the first flow path, may not be the red light source 31R, and the light source thermally coupled to the second heat dissipation member via the heat transport member may not be the green light source 31G. For example, the light source thermally coupled to the first heat dissipation member may be the blue light source 31B. In this case, the second fan 47 may circulate the second airflow to the heat dissipation member thermally coupled to the red light source 31R. That is, in the projector according to the present disclosure, the first light emitted by the first light source may not be red light, and the second light emitted by the second light source may not be green light.

In the above embodiments, the projectors 1A, 1B each include the first fan 44 as the first cooling unit and the second fan 47 as the second cooling unit. However, the present disclosure is not limited thereto and each cooling unit may not be a fan.

In the above embodiments, the green heat dissipation member 43 as the second heat dissipation member includes the first region 431 overlapping the red heat dissipation member 42 as the first heat dissipation member in the -Z direction, which is the direction of circulation of the first airflow, and the second region 432 not overlapping the red heat dissipation member 42. That is, the entirety of the red heat dissipation member 42 overlaps a part of the green heat dissipation member 43 in the -Z direction. However, the present disclosure is not limited thereto, and in the -Z direction, the entirety of the red heat dissipation member 42 and the entirety of the green heat dissipation member 43 may overlap each other, or a part of the red heat dissipation member 42 and the entirety of the green heat dissipation member 43 may overlap each other. Also, in the -Z direction, a part of the red heat dissipation member 42 and a part of the green heat dissipation member 43 may overlap each other, and another part of the red heat dissipation member 42 and another part of the green heat dissipation member 43 may not overlap each other.

In the above embodiments, the heat transport member 41 is a heat pipe. However, the heat transport member 41 is not limited thereto and may be another heat transport member other than the heat pipe, such as a vapor chamber. Moreover, the heat transport member 41 may be a rod-shaped body or a plate-shaped body made of metal as long as the heat transport member can transport the heat of a heating element to a heat dissipation member provided corresponding to the heating element. Also, the heat transport member 41 may be formed integrally with the substrate 312G.

In the above embodiments, the surface area of the second region 432 of the green heat dissipation member 43 as the second heat dissipation member is larger than the surface area of the first region 431. However, the present disclosure is not limited thereto, and the surface area of the second region 432 may be equal to or less than the surface area of the first region 431, for example, when a sufficiently low-temperature first airflow can be circulated to the second region 432.

In the above embodiments, the first region 431 is provided at a position closer to the green light source 31G, which is a heat source, than the second region 432 in the green heat dissipation member 43. In other words, the second region 432 is provided on the side opposite to the green light source 31G with respect to the first region 431 in the green heat dissipation member 43. However, the present disclosure is not limited thereto, and in the green heat dissipation member 43 as the second heat dissipation member, the position of the first region 431 facing the red heat dissipation member 42 as the first heat dissipation member and the position of the second region 432 not facing the red heat dissipation member 42 may be reversed.

In the above embodiments, the projectors 1A, 1B each include the first duct 45 accommodating the red heat dissipation member 42, the green heat dissipation member 43, and the first fan 44. However, the present disclosure is not limited thereto, and the projectors 1A, 1B may not include the first duct 45.

In the above embodiments, the first duct 45 includes the guide part 451 that extends in the -X direction from the outlet port 442 of the first fan 44 as it goes toward the -Z direction and guides the first airflow sent out from the outlet port 442 to the second region 432 extending further in the -X direction than the second imaginary line VL2. However, the present disclosure is not limited thereto, and when the second region 432 is disposed more to the first imaginary line VL1 side than the second imaginary line VL2, the guide part 451 may not extend in the -X direction as it goes toward the -Z direction. For example, the guide part 451 may extend along the -Z direction.

Also, the end part of the guide part 451 in the +Z direction may not necessarily be in contact with the outlet port 442 and may be disposed at a position close to the outlet port 442.

In the above embodiments, the red heat dissipation member 42 is disposed between the first imaginary line VL1 and the second imaginary line VL2. However, the present disclosure is not limited thereto, and a part of the red heat dissipation member 42 may not be disposed between the first imaginary line VL1 and the second imaginary line VL2.

In the above embodiments, the green heat dissipation member 43 extends across the second imaginary line VL2 to the side opposite to the first imaginary line VL1 with respect to the second imaginary line VL2. However, the present disclosure is not limited thereto, and the green heat dissipation member 43 may not extend across the second imaginary line VL2 as described above. That is, the end part of the second region 432 in the -X direction may be located on the first imaginary line VL1 side with respect to the second imaginary line VL2.

In the above embodiments, the red heat dissipation member 42 has a configuration in which the plurality of fins 42F along the XZ plane are arranged along the +Y direction. The green heat dissipation member 43 has a configuration in which the plurality of fins 43F along the YZ plane are arranged along the -X direction. However, the arrangement directions of the fins 42F, 43F may be the same direction.

The red heat dissipation member 42 may be a plurality of pins protruding along the X-axis instead of the plurality of fins 42F. The green heat dissipation member 43 may be a pin protruding along the Y axis instead of the plurality of fins 43F.

In the above embodiments, the array pitch of the fins 42F as the first fins is smaller than the array pitch of the fins 43F as the second fins. However, the array pitch of the fins 42F may be equal to or larger than the array pitch of the fins 43F.

For example, when the array pitch of the fins 42F is larger than the array pitch of the fins 43F, the first airflow easily circulates between the plurality of fins 42F and therefore the pressure loss of the first airflow caused by the circulation of the first airflow through the red heat dissipation member 42 can be reduced. Therefore, since the first airflow passing through the red heat dissipation member 42 can be easily circulated to the green heat dissipation member 43, the cooling efficiency of the green heat dissipation member 43 can be increased, and since the load of the first fan 44 can be suppressed, noise caused by the fan such as wind noise can be reduced.

In the above embodiments, the surface area of the green heat dissipation member 43 as the second heat dissipation member is larger than the surface area of the red heat dissipation member 42 as the first heat dissipation member. However, the present disclosure is not limited thereto, and the surface area of the second heat dissipation member may be equal to or less than the surface area of the first heat dissipation member, for example, when the heat dissipated by the second heat dissipation member is relatively small.

In the above embodiments, the projectors 1A, 1B each include the blue light source 31B as the third light source, the blue heat dissipation member 46 as the third heat dissipation member, and the second fan 47 that circulates the second airflow to the blue heat dissipation member 46. However, the projector according to the present disclosure is not limited thereto and may not include the third light source, the third heat dissipation member, and the second fan.

In the above embodiments, the blue heat dissipation member 46, to which heat is transferred from the blue light source 31B, dissipates the heat to the second airflow circulated by the second fan 47. However, the present disclosure is not limited thereto, and the blue heat dissipation member 46 may dissipate the heat to the first airflow circulated by the first fan 44. In this case, the blue heat dissipation member 46 may be located upstream of the red heat dissipation member 42 in the flow path of the first airflow, may be located between the red heat dissipation member 42 and the green heat dissipation member 43, or may be located downstream of the green heat dissipation member 43. Any two of the blue heat dissipation member 46, the red heat dissipation member 42, and the green heat dissipation member 43 may be arranged side by side in the ±Y direction or the ±X direction.

In the above embodiments, a partition wall part that extends in the ±Z direction to face the red heat dissipation member 42 and separates the first airflow F1 and the first airflow F4 may be disposed at a position in the -X direction with respect to the red heat dissipation member 42 as the first heat dissipation member. As such a partition wall part is disposed, the first airflow F1 circulating to the red heat dissipation member 42 can be prevented from leaking to the first airflow F4 side having a low flow path resistance and therefore a decrease in the cooling efficiency of the red heat dissipation member 42 can be suppressed. The end part of the partition wall part in the +Z direction may be located further in the +Z direction than the end part of the red heat dissipation member 42 in the +Z direction, and the end part of the partition wall part in the -Z direction may be located further in the -Z direction than the end part of the red heat dissipation member 42 in the -Z direction.

In the above embodiments, the projectors 1A, 1B include the three light modulation elements 34R, 34G, 34B. However, the present disclosure is not limited thereto and is also applicable to a projector including two or fewer, or four or more light modulation elements.

In the above embodiments, as shown in FIG. 3, the image projection device 3 has a layout in which the optical paths of the color lights emitted from the light sources 31R, 31G, 31B and incident on the light combining element 35 extend in a straight line. However, the optical components forming the image projection device 3 and the layout of the optical components in the image projection device 3 are not limited to the above.

In the above embodiments, the light modulation elements 34R, 34G, 34B each include the transmissive liquid crystal panel in which the light incident surface and the light exiting surface are different from each other. However, the light modulation elements are not limited thereto and may include a reflective liquid crystal panel in which the light incident surface and the light exiting surface are the same. Also, other than the liquid crystal light modulation element, any light modulation element that can modulate incident light to form image light corresponding to image information may be used, such as a light modulation element using a device using micromirrors, for example, a digital micromirror device (DMD).

### Summary of Present Disclosure

The present disclosure will be summarized below as appendices.

### Appendix 1

A projector includes: a first light source that emits first light; a second light source that emits second light in a direction intersecting a direction of emission of the first light from the first light source; a first image generation element that generates first image light from the first light; a second image generation element that generates second image light from the second light; a first heat dissipation member that is thermally coupled to the first light source and dissipates heat generated in the first light source; a heat transport member that transports heat generated in the second light source; a second heat dissipation member that dissipates the heat transported by the heat transport member; and a first cooling unit that circulates a first airflow through the first heat dissipation member and the second heat dissipation member along a first direction, and at least a part of the first heat dissipation member and at least a part of the second heat dissipation member overlap each other in the first direction, the second light source includes a light-emitting element that emits the second light, and a substrate that supports the light-emitting element, and the heat transport member extends in a straight line along the substrate.

According to such a configuration, since the first heat dissipation member and the second heat dissipation member are cooled by the first airflow circulated by the first cooling unit, the first light source and the second light source can be cooled by the first cooling unit. Therefore, the number of cooling units can be made fewer than when the cooling units are provided corresponding respectively to the first light source and the second light source. The size of the projector can thus be reduced.

When the bent part is present in the heat transport member such as a heat pipe and a vapor chamber, there is a problem in that the heat transport efficiency of the heat transport member decreases.

However, since the heat transport member extends in a straight line along the substrate supporting the light-emitting element, a decrease in the heat transport efficiency of the heat transport member can be suppressed.

Thus, the size of the projector can be reduced and the cooling efficiency for the light source can be increased.

### Appendix 2

In the projector according to Appendix 1, the second heat dissipation member has a first region which overlaps the first heat dissipation member in the first direction and in which the first airflow circulating through the first heat dissipation member circulates, and a second region which does not overlap the first heat dissipation member in the first direction and in which the first airflow not circulating through the first heat dissipation member circulates, and the first heat dissipation member is disposed in a direction opposite to the first direction with respect to the second heat dissipation member.

According to such a configuration, the first airflow circulating through the first heat dissipation member circulates through the first region of the second heat dissipation member, and the first airflow not circulating through the first heat dissipation member circulates through the second region of the second heat dissipation member. Thus, the temperature of the first airflow circulating through the second heat dissipation member can be made lower than when only the first airflow circulating through the first heat dissipation member circulates through the second heat dissipation member. Therefore, the cooling efficiency of the second heat dissipation member can be increased, and thus the cooling efficiency for the second light source can be increased.

### Appendix 3

In the projector according to Appendix 2, a surface area of the second region is larger than a surface area of the first region.

According to such a configuration, the surface area of the second region, through which the first airflow having a temperature lower than the temperature of the first airflow circulating through the first region circulates, is larger than the surface area of the first region. Thus, the cooling efficiency of the second heat dissipation member can be made higher than when the surface area of the second region is equal to or less than the surface area of the first region. Therefore, the cooling efficiency for the second light source can be increased.

### Appendix 4

The projector according to Appendix 2 or 3 further includes a guide part that extends along the first direction and guides the first airflow to the second heat dissipation member, and the first cooling unit includes an outlet port for sending out the first airflow and is disposed upstream of the first heat dissipation member and the second heat dissipation member in a flow path of the first airflow, and the guide part couples a part on the outlet port side to a part around the second region.

According to such a configuration, the first airflow sent out from the outlet port can be easily circulated to the second region. Therefore, the cooling efficiency of the second heat dissipation member can be made higher than when the guide part is not provided.

### Appendix 5

In the projector according to Appendix 4, the first heat dissipation member is disposed between a first imaginary line extending in the first direction from one end of the outlet port and a second imaginary line extending in the first direction from the other end of the outlet port, the second heat dissipation member extends across the second imaginary line to a side opposite to the first imaginary line with respect to the second imaginary line, and the guide part extends on a side opposite to the first imaginary line with respect to the second imaginary line as it goes in the first direction.

According to such a configuration, the second heat dissipation member can be configured to be long in the intersecting direction with respect to each of the first imaginary line and the second imaginary line. Accordingly, since the second region can be extended in the intersecting direction, the surface area of the second region can be easily increased.

Also, since the guide part extends as described above, the first airflow sent out from the outlet port can be easily circulated to the second heat dissipation member extending across the second imaginary line to the side opposite to the first imaginary line.

Therefore, the cooling efficiency of the second heat dissipation member can be increased.

### Appendix 6

In the projector according to any one of Appendices 1 to 5, the first heat dissipation member includes a plurality of first fins through which the first airflow circulates along the first direction, and the second heat dissipation member includes a plurality of second fins through which the first airflow circulates along the first direction.

According to such a configuration, since each heat dissipation member has the plurality of fins, the surface area of each heat dissipation member can be easily increased. Thus, the cooling efficiency of each heat dissipation member can be adjusted by adjusting the number of fins, adjusting the surface area of each fin, or the like, and thus the cooling efficiency for each light source can be adjusted. Therefore, the temperature of each light source can be easily adjusted.

### Appendix 7

In the projector according to Appendix 6, each of the plurality of first fins is formed in a plate shape along a plane defined by the first direction and a second direction orthogonal to the first direction, and is disposed side by side in a third direction orthogonal to each of the first direction and the second direction, and each of the plurality of second fins is formed in a plate shape along a plane defined by the first direction and the third direction, and is disposed side by side in the second direction.

According to such a configuration, the direction in which the plurality of first fins are arranged and the direction in which the plurality of second fins are arranged are orthogonal to each other as viewed along the first direction. Thus, a turbulent flow generated by the circulation of the first airflow along the plurality of first fins can be circulated through the plurality of second fins arranged in a different direction, and the temperature boundary layer of the plurality of second fins can be reduced in thickness by such a turbulent flow. That is, heat transfer from each second fin to the first airflow can be promoted by the turbulent flow. Therefore, since the cooling efficiency of the second heat dissipation member can be increased and the first airflow having a low temperature circulates through the first heat dissipation member, the cooling efficiency of each of the heat dissipation members can be increased.

### Appendix 8

In the projector according to Appendix 6 or 7, an array pitch of the plurality of first fins is different from an array pitch of the plurality of second fins.

According to such a configuration, the cooling efficiency of each heat dissipation member can be adjusted by adjusting the array pitch of each fin, and thus the cooling efficiency for each light source can be adjusted. Therefore, the temperature of each light source can be easily adjusted.

### Appendix 9

In the projector according to Appendix 8, the array pitch of the plurality of first fins is smaller than the array pitch of the plurality of second fins.

According to such a configuration, even when the volume of the first heat dissipation member is relatively small, a surface area necessary for cooling the first heat dissipation member can be secured.

### Appendix 10

In the projector according to any one of Appendices 1 to 9, a surface area of the second heat dissipation member is equal to or larger than a surface area of the first heat dissipation member.

According to such a configuration, the heat dissipation efficiency of the second heat dissipation member, through which the first airflow increased in temperature due to the circulation through the first heat dissipation member circulates, can be made higher than when the surface area of the second heat dissipation member is smaller than the surface area of the first heat dissipation member. Therefore, the temperature of the second light source can be maintained to be low.

### Appendix 11

The projector according to any one of Appendices 1 to 10 further includes: a third light source that emits third light in a direction opposite to the direction of emission of the first light from the first light source; a third heat dissipation member that dissipates heat generated in the third light source; and a second cooling unit that circulates an airflow to the third heat dissipation member.

According to such a configuration, the third heat dissipation member can be cooled independently of the first heat dissipation member and the second heat dissipation member. Therefore, the third heat dissipation member can be effectively cooled, and thus the third light source can be effectively cooled.

### Appendix 12

The projector according to Appendix 11 further includes a third image generation element that generates third image light from the third light, and a light combining element that combines the first image light, the second image light, and the third image light, and the first light source includes a red LED that emits red light as the first light, the light-emitting element is a green LED that emits green light as the second light, and the third light source includes a blue LED that emits blue light as the third light.

According to such a configuration, full-color image light can be generated by the projector.

When the temperature of the red LED exceeds the upper limit of an appropriate temperature range or when the temperature of the red LED falls below the lower limit of the appropriate temperature range, the amount of light emitted from the red LED drastically decreases. However, the first heat dissipation member that dissipates the heat of the red LED can be cooled by the airflow having a temperature lower than that of the airflow circulating through the second heat dissipation member, to which the heat of the green LED is transported. Therefore, the temperature of the red LED can be easily maintained within the appropriate temperature range.

## Claims

1. A projector comprising:
a first light source configured to emit first light;
a second light source configured to emit second light in a direction intersecting a direction of emission of the first light from the first light source;
a first image generation element configured to generate first image light from the first light;
a second image generation element configured to generate second image light from the second light;
a first heat dissipation member thermally coupled to the first light source and configured to dissipate heat generated in the first light source;
a heat transport member configured to transport heat generated in the second light source;
a second heat dissipation member configured to dissipate the heat transported by the heat transport member; and
a first cooling unit configured to circulate a first airflow through the first heat dissipation member and the second heat dissipation member along a first direction, wherein
at least a part of the first heat dissipation member and at least a part of the second heat dissipation member overlap each other in the first direction,
the second light source includes
a light-emitting element configured to emit the second light, and
a substrate configured to support the light-emitting element, and
the heat transport member extends in a straight line along the substrate.

2. The projector according to claim 1, wherein
the second heat dissipation member has
a first region which overlaps the first heat dissipation member in the first direction and in which the first airflow circulating through the first heat dissipation member circulates, and
a second region which does not overlap the first heat dissipation member in the first direction and in which the first airflow not circulating through the first heat dissipation member circulates, and
the first heat dissipation member is disposed in a direction opposite to the first direction with respect to the second heat dissipation member.

3. The projector according to claim 2, wherein
a surface area of the second region is larger than a surface area of the first region.

4. The projector according to claim 2, further comprising
a guide part extending along the first direction and configured to guide the first airflow to the second heat dissipation member, wherein
the first cooling unit includes an outlet port for sending out the first airflow and is disposed upstream of the first heat dissipation member and the second heat dissipation member in a flow path of the first airflow, and
the guide part couples a part on the outlet port side to a part around the second region.

5. The projector according to claim 4, wherein
the first heat dissipation member is disposed between a first imaginary line extending in the first direction from one end of the outlet port and a second imaginary line extending in the first direction from the other end of the outlet port,
the second heat dissipation member extends across the second imaginary line to a side opposite to the first imaginary line with respect to the second imaginary line, and
the guide part extends on a side opposite to the first imaginary line with respect to the second imaginary line as it goes in the first direction.

6. The projector according to claim 1, wherein
the first heat dissipation member includes a plurality of first fins through which the first airflow circulates along the first direction, and
the second heat dissipation member includes a plurality of second fins through which the first airflow circulates along the first direction.

7. The projector according to claim 6, wherein
each of the plurality of first fins is formed in a plate shape along a plane defined by the first direction and a second direction orthogonal to the first direction, and is disposed side by side in a third direction orthogonal to each of the first direction and the second direction, and
each of the plurality of second fins is formed in a plate shape along a plane defined by the first direction and the third direction, and is disposed side by side in the second direction.

8. The projector according to claim 6, wherein
an array pitch of the plurality of first fins is different from an array pitch of the plurality of second fins.

9. The projector according to claim 8, wherein
the array pitch of the plurality of first fins is smaller than the array pitch of the plurality of second fins.

10. The projector according to claim 1, wherein
a surface area of the second heat dissipation member is equal to or larger than a surface area of the first heat dissipation member.

11. The projector according to claim 1, further comprising:
a third light source configured to emit third light in a direction opposite to the direction of emission of the first light from the first light source;
a third heat dissipation member configured to dissipate heat generated in the third light source; and
a second cooling unit configured to circulate an airflow to the third heat dissipation member.

12. The projector according to claim 11, further comprising:
a third image generation element configured to generate third image light from the third light; and
a light combining element configured to combine the first image light, the second image light, and the third image light, wherein
the first light source includes a red LED that emits red light as the first light,
the light-emitting element is a green LED that emits green light as the second light, and
the third light source includes a blue LED that emits blue light as the third light.
